# EUROPEAN PATENT APPLICATION

(11) **EP 1 845 493 A2**
(43) Date of publication of application: **17.10.2007**
(21) Application number: 07105709.5
(22) Date of filing: 05.04.2007
(51) Int. Cl.: G06T 9/00, H04N 7/30

(54) **Enhanced image compression using scene prediction**

(30) Priority: 10.04.2006 US 401165
(71) Applicant: Honeywell International Inc., Morristown, NJ 07962 (US)
(72) Inventor: Keith, Mark, Valrico, FL 33594 (US)
(74) Representative: Haley, Stephen

(57) **Abstract**

A method of communicating an image file is provided. The method comprises generating at least one scene map based on knowledge of the composition of a targeted area, and reordering data in an image file using the at least one generated scene map such that data corresponding to image segments with similar properties is placed near each other in the image file.

## Description

In many data transmission applications, bandwidth limitations are a source of delays. These delays can persist for long periods of time and limit the amount of information that can be successfully transferred in a given time period. For example, in space telemetry applications, it can take hours before sufficient image data is received to have a modest image. In such applications it is common for the effective bandwidth as measured by the data transmission rate to be below one thousand bits per second. The limitations caused by low bandwidth can jeopardize mission objectives during the often short life of a space exploration probe.

Many compression algorithms exist to try to reduce the amount of data transmitted and, hence, decrease the transmission time. Some of these algorithms are lossy compression algorithms. While lossy algorithms have higher compression rates than lossless compression algorithms, they have limited use in many applications, such as scientific applications which require the decompressed image to be bit identical to the original image prior to compression. Lossless compression algorithms provide the identical image but have lower compression rates and, therefore, longer transmission times. Compression algorithms exist which attempt to predict the data in one image based on a previous data frame. These algorithms are lossy in nature and apply to rapid time sequenced image data such as video where the motion of an object through the field of view can be tracked. These algorithms do not benefit from knowledge of the subject matter existing before the creation of the initial image.

Available bandwidth is bounded by power consumption, antenna pointing accuracy and size, effective distance to the receiver, and available transmission time. Modifications to increase available power, decrease system power consumption, or improve antenna characteristics like size and accuracy are often costly and/or impractical.

For the reasons stated above and for reasons stated below which will become apparent to those of skill in the art upon reading and understanding the present specification, there is a need in the art for a method of decreasing transmission times of image data.

### SUMMARY

The above-mentioned problems and other problems are resolved by the present invention and will be understood by reading and studying the following specification.

In one embodiment, a method of communicating an image file is provided. The method comprises generating at least one scene map based on knowledge of the composition of a targeted area, and reordering data in an image file using the at least one generated scene map such that data corresponding to image segments with similar properties is placed near each other in the image file.

In another embodiment, an image communication system is provided. The image communication system comprises at least one image sensor for collecting image data; and an image size reduction unit adapted to generate at least one scene map based on the composition of an area targeted by the at least one image sensor. The image size reduction unit is further adapted to reorder the data in an image file collected by the at least one image sensor based on the at least one generated scene map, wherein the data in the image file is reordered to locate data representative of image segments with similar properties near each other in the image file.

In another embodiment, a computer program product is provided. The computer program product comprises a computer-usable medium having computer-readable code embodied therein for configuring a computer processor is provided. The computer-readable code comprises a first executable computer-readable code configured to cause a computer processor to calculate at least one scene map using received positional data, and a second executable computer-readable code configured to cause a computer processor to process data in an image file using the at least one calculated scene map such that the data in the image file is reordered with data corresponding to image segments having similar properties located in adjacent locations of the image file.

### DRAWINGS

The present invention can be more easily understood and further advantages and uses thereof more readily apparent, when considered in view of the description of the preferred embodiments and the following figures in which:
Figure 1 is a flowchart showing a method of enhancing image compression according to one embodiment of the present invention.
Figure 2 is a diagram illustrating use of a scene map to reorder image data according to one embodiment of the present invention.
Figure 3 is a block diagram of an image communication system according to one embodiment of the present invention.
Figure 4 is a block diagram of an exemplary image size reduction unit 304 according to one embodiment of the present invention.

### DETAILED DESCRIPTION

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. It should be understood that the exemplary method illustrated may include additional or fewer steps or may be performed in the context of a larger processing scheme. Furthermore, the methods presented in the drawing figures or the specification are not to be construed as limiting the order in which the individual steps may be performed. The following detailed description is, therefore, not to be taken in a limiting sense.

Embodiments of the present invention decrease transmission time of image data by improving the compression rates of image data prior to transmission. Embodiments of the present invention reorder the image data to a statistically more compressible format. This reordering is achieved by using data already known at both a remote source and the receiving station, such data includes the location of various objects in an area being targeted by image sensors.

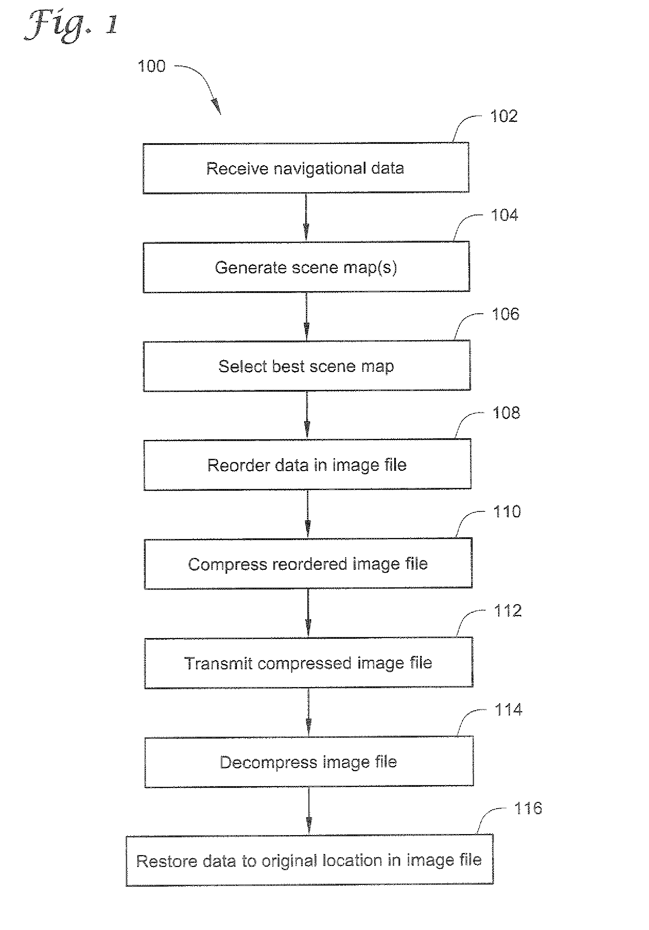

Figure 1 is a flowchart showing a method 100 of communicating an image file according to one embodiment of the present invention. Method 100 enhances image compression of the image file. At 102, navigational data is received. In some embodiments, navigational data is received from inertial navigation sensors. In other embodiments, navigational data is received from other navigation sensors, such as global positioning system (GPS) sensors. The navigational data is used, at 104, to generate one or more predicted scene maps. By using the position and orientation of image sensors as reported by the navigation data, knowledge is obtained regarding the composition of an area being targeted by an image sensor. The composition of a targeted area includes, but is not limited to, location, size, and color of objects in the targeted area. Additionally, the color of an object includes varying spectra, such as infrared, visible light, ultraviolet, and reflectivity to electromagnetic radiation of all energies such as that used in radar.

For example, the position and orientation of a satellite image sensor acquiring images of Jupiter is known from the inertial navigation data. By using the known position and orientation of the satellite image sensor, the position and size of Jupiter and other celestial bodies in the targeted area are calculated. Calculations of the target area composition use existing known data and image files together with knowledge of the image sensor position to model the area currently being targeted by the image sensor. Using techniques known to one of skill in the art, the image sensors acquire an image of the targeted area which is stored as data in an image file. A system performing this activity might store the image file on persistent media such as a flash memory system or the file might remain in high speed storage like random access memory. The data format af the image file is any appropriate image data format including, but not limited to, a bitmap (bmp), a Joint Photographic Experts Group (jpeg) file, a Graphics Interchange Format (gif) file, and a Portable Network Graphics (png) file, etc. Additionally, in some embodiments, the data format is a proprietary format.

In this example, a plurality of scene maps are generated. At 106, the data in the plurality of generated scene maps is compared to the acquired image file and the scene map which best matches the image file is selected. Algorithms known by one of skill in the art can be used to measure the accuracy of a particular scene map. Understanding the accuracy of the scene map generation allows the system to tolerate small navigational errors without compromising the efficiency of the process. An example algorithm is to generate multiple scene maps each representing a small deviation from the reported navigational position. The scene map which represents the smallest error from the image file data is selected to continue processing. The navigational parameters used to generate the most accurate scene map are returned to the receiving station through insertion in the data stream. It is to be understood that, in embodiments generating only one scene map, the comparison and selection of scene maps described here with regards to 106 are not performed.

At 108, the data in the image file is reordered using the generated scene map such that data corresponding to image segments with similar properties is located near each other in the image file. The properties used in varying embodiments to reorder data in the image file include, but are not limited to, color values, gray scale values, and brightness levels, etc. The generated scene map facilitates reordering of the data in the image file by providing knowledge of the composition of the targeted area. By knowing details of the target area composition, it is known which data in the image file represents image segments with similar properties, such as similar color values. The ability to reorder data in the image file depends on how detailed the predicted scene map is. For image files of well known and well photographed objects, the scene map is capable of being highly detailed and, hence, the data in the image file can be more finely reordered which enables the compressed image file size to be more reduced. For image files of less known and less photographed areas or objects, the scene map is less detailed and the data in the image file is reordered more broadly, In this example, substantially all data contained in the original image file is present in the reordered image file including information not predicted by the scene map model.

At 110, the reordered image file is compressed using compression techniques known to one of skill in the art. The size of the compressed reordered image file is smaller than the size of the same compressed image file without being reordered, because reordering of the image file reduces the number of high frequency transients. High frequency transients are essentially portions of the image file with sharp lines or color transitions. The greater the number of high frequency transients, the less compression of the image file is possible. By using a scene map to reorder the data in the image file, there are less sharp lines and color transitions. Therefore, the image file can be compressed more.

At 112, the smaller compressed image file is transmitted to a receiving station. At 114, the compressed image file is decompressed. The decompressed image file is still reordered with data corresponding to image segments with similar properties near each other in the image file. At 116, the data in the image file corresponding to image segments with similar properties is restored to its original location, in this example, by generating a substantially identical scene map at the receiving station and applying it to the reordered image file. The receiving station generates a substantially identical scene map based on transmission of navigation data regarding the position and orientation of the image sensor to the receiving station. A substantially identical scene map is generated because the scene map is dependent on the navigation data of the image sensor and known target area composition data. Since the same navigation data and target area composition data are used in the receiving station, substantially the same scene map is generated.

Alternatively, in other embodiments, the scene map data used to reorder the original image data is compressed and transmitted to the receiving station for restoring the data in the image file to its original location. The scene map contains target area composition data which is used to map the data in the image file to their original location. Essentially, the reordering with the scene map is reversed. By using a scene map at the remote source (where the image sensor is located) and at the receiving station, embodiments of the present invention enable lossless compression algorithms to achieve greater compression without losing data.

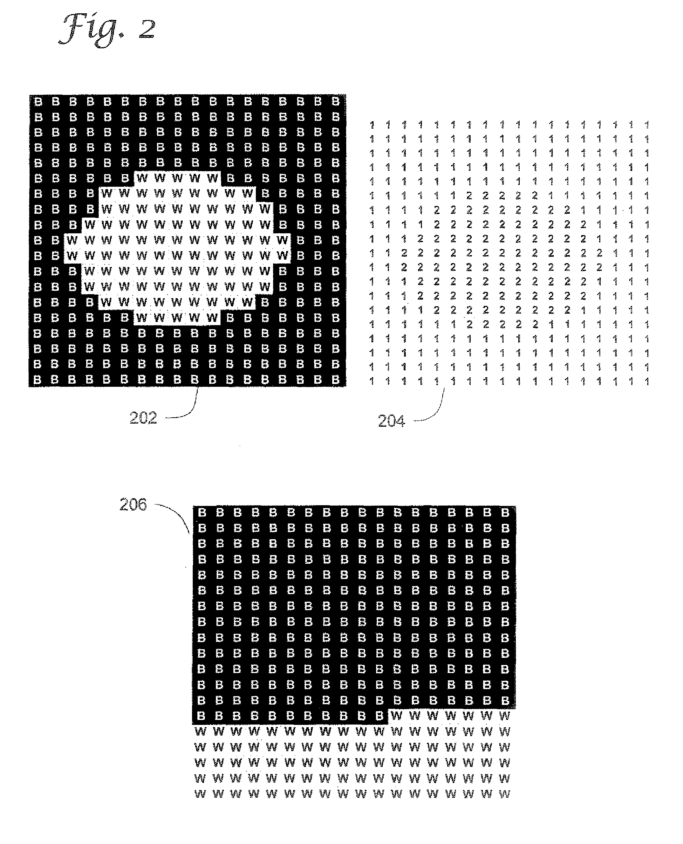

Figure 2 is a diagram illustrating use of a scene map to reorder data in an image file according to one embodiment of the present invention. For purposes of illustration and not by way of limitation, an image 202 of a white circle on a black background is used. However, it will be understood by one of skill in the art that in other embodiments, other images are used. Black segments of image 202 are labeled with the letter B, as shown in Fig. 2. White segments are labeled with the letter W. In some embodiments, each image segment represents an individual pixel. In other embodiments, each image segment represents groups of pixels.

Scene map 204 is generated using target area composition data for image 202 representing the location and size of a circular shape in the image. In the embodiment in Fig. 2, scene map 204 only provides data regarding the location and size of a circular shape but does not provide data regarding the color or other information about the circular shape. However, it will be understood by one of skill in the art that in other embodiments, other information including color data is provided in scene map 204. The location and size of the shape is indicated by segments labeled with the number 2.

In some embodiments, image 202 is reordered using scene map 204 by processing segments of image 202 in order from left-to-right and top-to-bottom. It will be understood by one of skill in the art that processing segments in image 202 refers herein to processing data in the image file corresponding to segments in image 202. In some such embodiments, segments in image 202 which correspond to segments in scene map 204 labeled with the number 1 are processed first. For example, starting in the upper left hand corner of image 202, each image segment (i.e. data in the image file corresponding to each image segment) in the top row is processed left-to-right. Each image segment which corresponds to a segment labeled number 1 in scene map 204 is placed in order in reordered image 206 (i.e. data in the image file is placed in order in the image file corresponding to reordered image 206). Once the top row is finished, the next lower row is processed in a similar fashion and so on to the last segment of the image in the lower right hand corner. It will be understood by one of skill in the art that although processing from left-to-right and top-to-bottom is discussed in regards to Fig. 2, any processing order can be used in other embodiments.

When a segment in image 202 not corresponding to a segment labeled number 1 in scene map 204 is encountered, that segment in image 202 is skipped. Once the final segment in image 202 is reached, the processing order repeats at the upper left hand corner in order to process segments in image 202 which correspond to segments labeled number 2 in scene map 204. In this run, segments in image 202 which do not correspond to a segment labeled number 2 in scene map 204 are skipped. In other embodiments, segments in image 202 are not skipped. In such embodiments, as each image segment is reached it is assigned to one of a plurality of temporary storage locations based on the number of the corresponding segment in scene map 204. As stated above, it will be understood by one of skill in the art that processing segments in image 202 refers herein to processing data in the image file corresponding to segments in image 202. For example, assigning each image segment to one of a plurality of temporary storage locations refers to assigning data of the image file corresponding to each image segment to one of a plurality of temporary storage locations based on scene map 204. Once all the data in the image file has been assigned to a temporary storage location, the data in each temporary storage location is combined with data from other temporary storage locations, one storage location after another. In other embodiments, other means are used to reorder segments in image 202 using scene map 204.

Although only two distinct types of segments are used in scene map 204 in Fig 2, it will be understood by one of skill in the art that N distinct segment types are used in other embodiments. In some such embodiments, the image file is processed N times to process each segment type separately. Alternatively, in other embodiments the scene map data is arranged in a manner which is efficient to traverse resulting in the ordered output of image segments after one processing cycle. Additionally, it will be understood by one of skill in the art that although scene map 204 in Fig. 2 identifies segments using numbers, in other embodiments, other means are used to distinguish similar segments. For example, in some embodiments, a color value (i.e. RGB value) is used to identify similarly colored segments for reordering data in the image file corresponding to image 202.

The result of reordering data in the image file corresponding to image 202 using scene map 204 is shown as reordered image 206. As can be seen, the number of transitions between black and white is greatly reduced in reordered image 206 as compared to image 202. Therefore, the compressed size of the image file corresponding to reordered image 206 will be less than the compressed size of the image file corresponding to image 202. To reconstruct image 202 from reordered image 206 using scene map 204, a process similar to that described above is used. In some embodiments, the data in the image file corresponding to each segment of reordered image 206 is analyzed starting from the upper left hand corner and proceeding left-to-right and top-to-bottom. In other embodiments, other orders are followed for analyzing segments of reordered image 206.

Additionally, in some embodiments, scene map 204 is used as a template to restore segments to their original location. For example, in Fig. 2, each segment of 204 is filled with segments of reordered image 206. As data representative of each segment of reordered image 206 is reached, starting in the upper left hand corner and proceeding left-to-right top-to-bottom, it is assigned to the next available segment labeled number 1 starting in the upper left hand corner of scene map 204 and proceeding left-to-right top-to-bottom. Once all segments labeled number 1 are filled, segments labeled number 2 are filled. For embodiments with N distinct segment types, the process continues until all segments labeled number N are filled. In other embodiments, other means are used for restoring segments of reordered image 206 to their original location using scene map 205. As noted above, the process of reordering and restoring image 202 refers to the process of reordering and restoring data in the image file corresponding to segments of image 202.

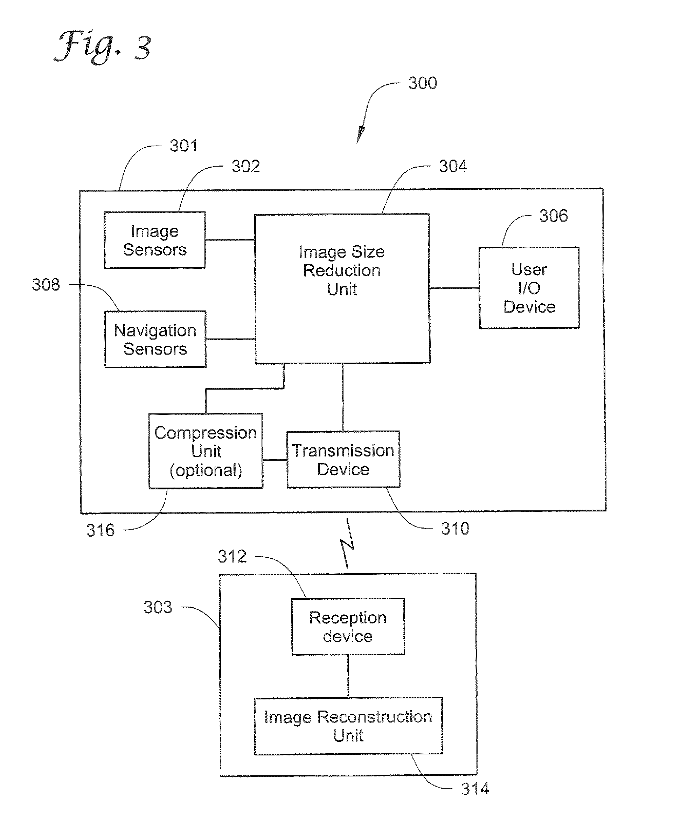

Figure 3 is a block diagram of an image communication system 300 according to one embodiment of the present invention. System 300 includes remote source 301 and receiving station 303. Remote source 301 includes one or more image sensors 302 and one or more navigation sensors 308. Image sensors 302 are implemented as any appropriate device for collecting image data including, but not limited to, a visible light camera, a thermographic camera, a spectrometer, and any other existing or later developed imaging technology. Image data collected by image sensors 302 is stored in an image file and transmitted to image size reduction unit (ISRU) 304 located at remote source 301. ISRU 304 also receives navigation data from navigation sensors 308. In some embodiments, navigations sensors are inertial navigation sensors. In other embodiments, other types of navigation sensors are used, such as, GPS sensors.

ISRU 304 generates a scene map based on the composition af the area targeted by image sensors 302. In some embodiments, remote source 301 also includes user input/output device 306. User I/O device 306 is used, for example, to specify over what spectrum ISRU 304 is to generate a scene map. Based on the generated scene map, ISRU 304 reorders the data in the image file such that data in the image file representative of image segments with similar properties (e.g. color values) is located near each other in the image file, as described above. In some embodiments, ISRU 304 is also adapted to compress the reordered image file. In other embodiments, the reordered image file is compressed by compression unit 316 (optional) located at remote source 301. The image file is compressed using any suitable compression algorithm. The compressed image file is then received by transmission device 310 also at remote source 301.

Transmission device 310 transmits the compressed image file to reception device 312 at receiving station 303. In some embodiments, the compressed image file is transmitted using wireless communication techniques known to one of skill in the art. In other embodiments, the compressed image file is transmitted over any type of communication medium capable of carrying data using techniques known to one of skill in the art. Such communication medium includes, but is not limited to, fiber optic cable, coaxial cable, twisted pair copper wire, and persistent data storage mediums such as magnetic data storage media, optical storage media, and non-volatile memory devices. Reception device 312 passes the compressed image file to image reconstruction unit (IRU) 314 located in a receiving station 303. Additionally, in some embodiments, transmission device 310 transmits navigation data to reception device 312 which passes the navigation data to IRU 314. In such embodiments, IRU 314 uses the received navigation data to generate a scene map substantially equal to the scene map generated by ISRU 304. In other embodiments, transmission device 310 transmits scene map data to reception device 312 which passes the scene map data to IRU 314. IRU 314 uses the scene map to restore data in the image file representative of image segments with similar properties to their original locations, as described above.

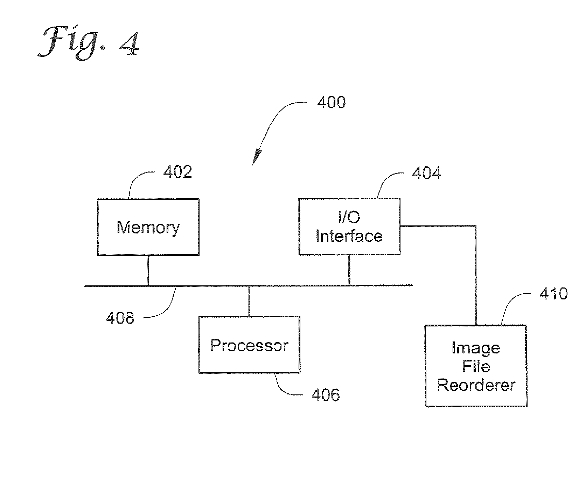

In some embodiments, ISRU 304 is implemented through a processor and computer readable instructions, an exemplary embodiment of which is discussed in relation to Fig. 4. In such embodiments, instructions for carrying out the various methods, process tasks, calculations, control functions, and output of data are implemented in software programs, firmware or computer readable instructions. These instructions are typically stored on any appropriate medium used for storage of computer readable instructions such as floppy disks, conventional hard disks, CD-ROM, flash memory ROM, nonvolatile ROM, RAM, and other like medium. In other embodiments, ISRU 304 is implemented through one or more application specific integrated circuits (ASIC). In such embodiments, circuitry including but not limited to logic gates, counters, flip flops, resistors, capacitors, etc. are used. In yet other embodiments, ISRU 304 is implemented as one or more field-programmable gate arrays (FPGA).

Figure 4 is a block diagram of an exemplary image size reduction unit 400 according to one embodiment of the present invention. ISRU 400 can be used to implement ISRU 304 shown in Fig. 3. ISRU 400 includes data bus 408 for transporting data to and from the various components of ISRU 400. in some embodiments, data received at input/output interface 404 is directly transferred to processor 406 for processing. In other embodiments, data received is first transferred to memory 402 for storing until being processed at a later time. In other embodiments, data received is transferred simultaneously to processor 406 and memory 402. Memory 402 includes, but is not limited to, any appropriate medium used for storage such as floppy disks, conventional hard disks, CD-RW, flash memory, RAM, and other like medium. In some embodiments, memory 402 stores known target area composition data obtained from prior image files and analysis. This composition data includes location and size of objects in the target areas. The composition data is used by processor 406 in generating a predictive scene map.

Processor 406 includes or interfaces with hardware components that support image processing. By way of example and not by way of limitation, these hardware components include one or more microprocessors, graphics processors, memories, storage devices, interface cards, and other standard components known in the art. Additionally, processor 406 includes or functions with software programs, firmware or computer readable instructions for carrying out various methods, process tasks, calculations, and control functions. These instructions are typically stored on any appropriate medium used for storage of computer readable instructions such as floppy disks, conventional hard disks, CD-ROM, flash ROM, nonvolatile ROM, RAM, and other like medium, in some embodiments, these instructions are stored on memory 402.

Processor 406 is adapted to generate at least one scene map, as described above, for an image file received at input/output interface 404. The at least one scene map is based on composition data and navigation data received at input/output interface 404. In some embodiments, the composition data is stored locally in memory 402 and retrieved based on the navigation data received. In some such embodiments, the composition data stored in memory 402 is capable of being updated by new data transmitted from a remote site and received at input/output interface 404. In other embodiments, the composition data is stored and transmitted from a remote site and received at input/output interface 404.

Additionally, in some embodiments, processor 406 is further adapted to reorder data in the image file received, locating data representative of segments with similar properties near each other in the image file, based on the generated scene map, as described above. In other embodiments, the scene map is output through input/output interface 404 to image file reorderer (IFR) 410. IFR 410 reorders the data in the image file using the generated scene map as described above. Additionally, in some embodiments, processor 406 is also adapted to compress the reordered image file using any suitable compression algorithm. In other embodiments, the reordered image file is output through input/output interface 404 to a compression unit (3 16 in Fig. 3) in order to be compressed.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A method (100) of communicating an image file, the method comprising:
generating at least one scene map based on knowledge of the composition of a targeted area (104); and
reordering data in an image file using the at least one generated scene map such that data corresponding to image segments with similar properties is placed near each other in the image file (108).

2. The method (100) of claim 1, wherein reordering data in an image file using the at least one generated scene map further comprises:
reordering data in an image file using the at least one generated scene map such that data corresponding to image segments with similar color values is placed near each other (108).

3. The method (100) of claim 1, wherein generating at least one scene map further comprises at least one of:
determining the composition of a targeted area based on navigation data (104); and
generating at least one scene map for a desired image spectrum (104).

4. The method (100) of claim 1, wherein reordering image data using the at least one generated scene map further comprises:
assigning data in the image file corresponding to image segments to one of a plurality of storage locations based on the generated scene map (108 and Fig. 2); and
combining the data in each of the plurality of storage location with the data in other storage locations one storage location after another, once all the data in the image file has been assigned to a storage location (108 and Fig. 2).

5. The method (100) of claim 1, further comprising:
compressing the reordered image file (110); and
transmitting the compressed image file from a remote source to a receiving station (112).

6. The method (100) of claim 1, wherein generating at least one scene map further comprises:
generating a plurality of scene maps (104);
comparing each of the plurality of scene maps to the image file to measure the accuracy of each scene map (106); and
selecting the scene map that best matches the image file based on the measured accuracy of each scene map (106).

7. The method of claim 6, wherein generating a plurality of scene maps further comprises:
generating a plurality of scene maps, wherein each scene map represents a deviation from reported navigational position (104, 106).
